# FASCICULE DE BREVET EUROPEEN

(11) **EP 4 573 158 B1**
(45) Date de publication et mention de la délivrance du brevet: **07.10.2026**
(21) Numéro de dépôt: 23757277.1
(22) Date de dépôt: 16.08.2023
(51) Int. Cl.: C08L 55/02

(54) **COMPOSITION DE MATÉRIAU ACRYLONITRILE-BUTADIÈNE-STYRÈNE**
ACRYLONITRIL-BUTADIEN-STYROL-MATERIALZUSAMMENSETZUNG
COMPOSITION OF ACRYLONITRILE-BUTADIENE-STYRENE MATERIAL

(30) Priorité: 17.08.2022 FR 2208338
(43) Date de publication de la demande: 25.06.2025
(73) Titulaire: SKYTECH, 27940 Le Val d'Hazey (FR)
(72) Inventeur: LEMOINE, Michaël, Georges, 75009 PARIS (FR); BOGAERT, Thomas, Jacques, Laurent, 92600 ASNIERES SUR SEINE (FR); TOIGO, Corentin, 27200 VERNON (FR)
(74) Mandataire: Lavoix
(86) Numéro de dépôt international: PCT/EP2023/072616
(87) Numéro de publication internationale: WO 2024/038113

(56) Documents cités:
- CN-A- 111 004 470
- CN-A- 111 978 674
- CN-A- 112 143 194
- US-A1- 2019 010 323

## Description

La présente invention concerne une composition de matériau acrylonitrile-butadiène-styrène comprenant différents additifs. La présente invention concerne aussi un procédé de préparation d'une telle composition. La présente invention concerne aussi l'utilisation d'une telle composition pour la fabrication d'une pièce. La présente invention concerne également une pièce comprenant une telle composition.

Les produits en matières plastiques sont généralement formés à partir de matières plastiques vierges (également appelées matériaux natifs). Par exemple, le matériau acrylonitrile-butadiène-styrène (connu sous l'acronyme ABS) est un matériau plastique utilisé dans de nombreuses applications de la vie quotidienne : jouets, biens de consommation, téléphones, appareils électroménagers, pièces notamment intérieures de véhicules automobiles. Bien que ce matériau présente en tant que tel des propriétés intéressantes de résistance au choc et de dureté, il est connu d'y ajouter un ou des additifs afin de produire différents grades dotés de propriétés spécifiques. Cependant, il existe toujours un besoin d'améliorer et/ou de moduler ces performances en fonction de l'application visée.

Il existe donc un besoin pour des matériaux acrylonitrile-butadiène-styrène présentant à la fois une bonne tenue aux chocs et une bonne tenue thermique.

En outre, les attentes de la société en matière de préservation de l'environnement et de réduction de la consommation des ressources sont de plus en plus fortes, et il est donc nécessaire de développer de nouveaux matériaux obtenus à partir de matières recyclées, en particulier à partir d'ABS recyclé.

L'inconvénient de l'utilisation d'un ABS recyclé est que ses performances sont généralement dégradées par rapport aux performances de l'ABS vierge initial correspondant, en particulier sa résistance au choc et sa tenue thermique. De plus, la future utilisation de l'ABS recyclé n'est pas nécessairement identique à son utilisation passée, ce qui implique que les propriétés du polymère recyclé doivent être modifiées/adaptées à cette nouvelle utilisation.

Il existe un besoin pour des matériaux acrylonitrile-butadiène-styrène recyclés présentant de bonnes performances, notamment thermiques et mécaniques, similaires ou supérieures aux performances des matériaux acrylonitrile-butadiène-styrène natifs. CN112143194A divulgue une composition comprenant un mélange recyclé composé de polycarbonate et d'ABS, un terpolymère de N-phényl-maléimide, styrène et anhydride maléique comme additif haute tenue thermique, un additif modificateur d'impact basé à un ABS de haute teneur en caoutchouc, et un additif anti-oxydant. US2019/010323A1 décrit une autre composition à base d'ABS comprenant un additif haute tenue thermique et un additif modificateur d'impact.

Un objectif de la présente invention est de fournir une composition de matériau acrylonitrile-butadiène-styrène, en particulier de matériau acrylonitrile-butadiène-styrène recyclé, présentant de bonnes perfomances de tenue thermique et de résistance aux chocs.

En particulier, un objectif de la présente invention est de fournir une composition de matériau acrylonitrile-butadiène-styrène, en particulier de matériau acrylonitrile-butadiène-styrène recyclé, présentant une valeur de module de flexion supérieure ou égale à 2150 MPa, de préférence supérieure ou égale à 2300 MPa.

Un autre objectif particulier de l'invention est de fournir une composition de matériau acrylonitrile-butadiène-styrène, en particulier de matériau acrylonitrile-butadiène-styrène recyclé, présentant une valeur de résistance au choc IZOD supérieure ou égale à 9 kJ/m², de préférence supérieure ou égale à 10 kJ/m².

Un autre objectif particulier de l'invention est de fournir une composition de matériau acrylonitrile-butadiène-styrène, en particulier de matériau acrylonitrile-butadiène-styrène recyclé, présentant une valeur de température de fléchissement sous charge supérieure ou égale à 95 °C, de préférence supérieure ou égale à 99°C, ou un point Vicat supérieur ou égal à 94°C, de préférence supérieur ou égal à 97°C.

Encore un autre objectif de l'invention est de fournir une composition de matériau acrylonitrile-butadiène-styrène, en particulier de matériau acrylonitrile-butadiène-styrène recyclé, qui présente à la fois une valeur de module de flexion supérieur ou égal à 2150 MPa, de préférence supérieure ou égale à 2300 MPa, une valeur de résistance au choc IZOD supérieure ou égale à 9 kJ/m², de préférence supérieure ou égale à 10 kJ/m², et une valeur de température de fléchissement sous charge supérieure ou égale à 95 °C, de préférence supérieure ou égale à 99°C, ou un point Vicat supérieur ou égal à 94°C, de préférence supérieur ou égal à 97°C.

La présente invention concerne donc une composition comprenant :
- un polymère acrylonitrile-butadiène-styrène ou un dérivé de polymère acrylonitrile-butadiène-styrène,
- un additif haute tenue thermique sous la forme d'un terpolymère d'un monomère maléimide N-substitué, d'un monomère vinylique et d'un monomère d'anhydride d'acide dicarboxylique insaturé,
- au moins un premier additif modificateur d'impact et un deuxième additif modificateur d'impact, et
- au moins un additif anti-oxydant,
dans laquelle la teneur massique totale en additifs modificateur d'impact varie de 8% à 35% par rapport à la masse totale de la composition, et le ratio entre la teneur massique en deuxième additif modificateur d'impact et la teneur massique en premier additif modificateur d'impact varie de 0,1 à 12.

De préférence, dans la composition selon l'invention, la teneur massique en additif haute tenue thermique varie de 15% à 35%, préférentiellement de 18% à 30%, avantageusement de 20% à 25% en masse par rapport à la masse totale de la composition.

Dans la composition selon l'invention, la teneur massique totale en additif modificateur d'impact varie de 8% à 35%, de préférence de 10% à 25%, préférentiellement de 12% à 20%, avantageusement de 13% à 18% en masse par rapport à la masse totale de la composition.

De préférence, dans la composition selon l'invention, le ratio entre la teneur massique totale en additif modificateur d'impact et la teneur massique en additif haute tenue thermique varie de 0,3 à 2,0, de préférence de 0,4 à 1,5, préférentiellement de 0,5 à 1,2, plus préférentiellement de 0,6 à 1,0, avantageusement de 0,65 à 0,85.

De préférence, dans la composition selon l'invention, la teneur en polymère acrylonitrile-butadiène-styrène ou en dérivé de polymère acrylonitrile-butadiène-styrène varie de 40% à 75%, préférentiellement de 50% à 70%, plus préférentiellement de 55% à 65%, avantageusement de 60% à 65% en masse par rapport à la masse totale de la composition.

De préférence, la composition selon l'invention est caractérisée par un module de flexion à 23°C d'une valeur supérieure ou égale à 1800 MPa, préférentiellement supérieure ou égale à 2000 MPa, plus préférentiellement supérieure ou égale à 2300 MPa, plus préférentiellement comprise entre 2000 MPa et 2800 MPa, avantageuseument comprise entre 2200 MPa et 2500 MPa, avantageusement comprise entre 2300 et 2500 MPa.

La valeur du module de flexion de la composition selon l'invention est déterminée suivant la norme ISO 178 (version de 2019).

De préférence, la composition selon l'invention est caractérisée par une résistance au choc IZOD d'une valeur supérieure ou égale à 7,5 kJ/m², préférentiellement supérieure ou égale à 8,0 kJ/m², plus préférentiellement supérieure ou égale à 9,8 kJ/m², plus préférentiellement comprise entre 8,5 et 16 kJ/m², plus préférentiellement comprise entre 9,0 et 15 kJ/m², avantageuseument comprise entre 9,8 et 12,5 kJ/m².

La valeur de la résistance au choc IZOD de la composition selon l'invention correspond à la résistance au choc IZOD entaillé à 23 °C déterminée suivant la norme ISO 180 de 2019.

De préférence, la composition selon l'invention est caractérisée par une température de fléchissement sous charge (TFC, ou HDT selon l'acronyme anglais) d'une valeur supérieure ou égale à 95°C, de préférence supérieure ou égale à 96°C, préférentiellement supérieure ou égale à 97°C, plus préférentiellement supérieure ou égale à 98°C, plus préférentiellement encore supérieure ou égale à 99°C. La valeur de la température de fléchissement sous charge peut être de préférence comprise entre 95°C et 103°C, avantageusement comprise entre 97°C et 101°C.

La valeur de la température de fléchissement sous charge de la composition selon l'invention est déterminée suivant la norme ISO 75-2A (version de 2013).

De préférence, la composition selon l'invention est caractérisée par un point de ramollissement Vicat d'une valeur supérieure ou égale à 94°C, de préférence supérieure ou égale à 97°C, préférentiellement supérieure ou égale à 99°C, plus préférentiellement supérieure ou égale à 100°C, plus préférentiellement encore supérieure ou égale à 103°C. La valeur du point de ramollissement Vicat peut être de préférence comprise entre 94°C et 110°C, avantageusement comprise entre 101°C et 105°C.

La valeur du point de ramollissement Vicat de la composition selon l'invention est déterminée suivant la norme ISO 306 (version de 2013).

### Polymère acrylonitrile-butadiène-styrène (ABS) et dérivés

La composition selon l'invention comprend un polymère acrylonitrile-butadiène-styrène ou un dérivé de polymère acrylonitrile-butadiène-styrène.

Selon l'invention, un dérivé de polymère acrylonitrile-butadiène-styrène est un copolymère dans lequel un monomère vinylique aromatique et un monomère de cyanure de vinyle sont greffés à un polymère caoutchouteux.

Le copolymère caoutchouteux est de préférence choisi dans le groupe constitué par les caoutchoucs à base de diène tels que le polybutadiène, le polystyrène-butadiène et le polyacrylonitrile-butadiène, les caoutchoucs saturés obtenus par hydrogénation de caoutchoucs à base de diène, les caoutchoucs acryliques tels que l'acrylate d'alkyle en C1-C8, l'acrylate de polybutyle et l'acrylate d'éthylhexyle, les caoutchoucs d'isoprène, les caoutchoucs de chloroprène, les caoutchoucs d'éthylène-propylène (EPM) et les caoutchoucs d'éthylène-propylène-diène monomères (EPDM). De préférence, le polymère caoutchouteux est choisi parmi les caoutchoucs à base de diène, plus préférentiellement est du polybutadiène.

La teneur en polymère caoutchouteux va de préférence de 5 à 30% en poids par rapport au poids total du dérivé de polymère acrylonitrile-butadiène-styrène
Le monomère vinylique aromatique est de préférence choisi dans le groupe constitué par le styrène, l'α-méthylstyrène, le β-méthylstyrène, le p-méthylstyrène, l'éthylstyrène, l'hydroxystyrène, le vinylxylène, le monochlorostyrène, le dichlorostyrène, le dibromostyrène et le vinylnaphtalène, et est de préférence le styrène.

La teneur en composé vinylique aromatique va de préférence de 35 à 80% en poids par rapport au poids total du dérivé de polymère acrylonitrile-butadiène-styrène.

Le monomère de cyanure de vinyle est de préférence choisi parmi les nitriles saturés tels que l'acrylonitrile et les nitriles insaturés tels que le méthacrylonitrile et l'éthacrylonitrile, et est de préférence l'acrylonitrile.

La teneur en composé de cyanure de vinyle va de préférence de 15 à 35% en poids par rapport au poids total du dérivé de polymère acrylonitrile-butadiène-styrène.

De préférence, la composition selon l'invention comprend un polymère acrylonitrile-butadiène-styrène.

Selon l'invention, un polymère acrylonitrile-butadiène-styrène est un polymère obtenu par greffage, de préférence par greffage en émulsion, d'acrylonitrile et de styrène sur un polybutadiène, par dispersion d'un copolymère acrylonitrile-butadiène dans une matrice de copolymère acrylonitrile-styrène ou par polymérisation en masse d'acrylonitrile et de styrène en présence de polybutadiène. De préférence, le polymère acrylonitrile-butadiène-styrène est une résine dans laquelle un copolymère styrène-acrylonitrile est greffé à un polybutadiène.

Il comprend en général de 15% à 35% en poids d'acrylonitrile, de 5% à 30% en poids de butadiène et de 35% à 80% en poids de styrène, par rapport au poids total du polymère acrylonitrile-butadiène-styrène.

De préférence, le polymère acrylonitrile-butadiène-styrène présente une masse molaire moyenne en nombre Mn comprise entre 50 000 et 75 000 g/mol.
le polymère acrylonitrile-butadiène-styrène présente une masse molaire moyenne en masse comprise entre 100 000 et 150 000 g/mol.

De préférence, le polymère acrylonitrile-butadiène-styrène présente une masse molaire moyenne en nombre Mn comprise entre 50 000 et 75 000 g/mol, et une masse molaire moyenne en masse comprise entre 100 000 et 150 000 g/mol.

Selon un mode de réalisation particulier, le polymère acrylonitrile-butadiène-styrène ou le dérivé de polymère acrylonitrile-butadiène-styrène est recyclé.

Par polymère recyclé, on entend un polymère post-consommation, c'est-à-dire ayant déjà servi pour la fabrication d'un objet. Par opposition, un polymère vierge (ou natif) est un polymère obtenu à l'issue du procédé de polymérisation permettant sa préparation à partir d'un ou plusieurs monomères. Il existe également des polymères post-industriels, qui désignent les déchets plastiques générés par les fabricants des produits de consommation mentionnés ci-dessus. Enfin, les polymères post-production sont les déchets générés par les producteurs de matières plastique. Les propriétés thermomécaniques des polymères post-production sont beaucoup plus proches de celles des polymères vierges que de celles des polymères post-consommation ou post-industriel. En effet, un polymère post-consommation a subit des chocs et/ou des variations de températures et/ou des rayonnements UV, et ses propriétés thermomécaniques sont amoindries par rapport à celles d'un polymère vierge ou à celles d'un polymère post-production. Un polymère post-industriel présente également des propriétés modifiées par rapport à un polymère vierge dans la mesure où il a subi des étapes de transformation.

Un polymère acrylonitrile-butadiène-styrène recyclé selon l'invention est un polymère acrylonitrile-butadiène-styrène post-consommation ou un polymère acrylonitrile-butadiène-styrène post-industriel, de préférence post-consommation.

Typiquement, un polymère acrylonitrile-butadiène-styrène post-consommation présente une valeur de module de flexion inférieure ou égale à 2700 MPa, de préférence inférieure ou égale à 2550 MPa, de préférence allant de 2200 MPa à 2700 MPa, préférentiellement allant de 2300 à 2550 MPa, et/ou une valeur de résistance au choc IZOD inférieure ou égale à 12 kJ/m², de préférence inférieure ou égale à 8 kJ/m², de préférence allant de 6 à 12 kJ/m², préférentiellement allant de 6,5 à 8 kJ/m², et/ou une valeur de température de fléchissement sous charge inférieure ou égale à 91°C, de préférence comprise entre 85°C et 91°C.

Le polymère acrylonitrile-butadiène-styrène recyclé est obtenu après collecte de produits de consommation comprenant du polymère acrylonitrile-butadiène-styrène, broyage de ces produits, séparation des broyats comprenant du polymère acrylonitrile-butadiène-styrène et fonte de ces broyats.

### Terpolymère d'un monomère maléimide N-substitué, d'un monomère vinylique et d'un monomère d'anhydride d'acide dicarboxylique insaturé, polyalphaméthylstyrène et leurs mélanges

La composition selon l'invention peut comprendre un additif haute tenue thermique comprenant un terpolymère d'un monomère maléimide N-substitué, d'un monomère vinylique et d'un monomère acide dicarboxylique insaturé (nommé terpolymère P dans la suite de la description).

Le monomère maléimide N-substitué est de préférence choisi dans le groupe constitué par les N-alkylmaléimides, tels que le N-méthylmaléimide, le N-éthylmaléimide, le N-butylmaléimide et le N-cyclohexylmaléimide, et les N-arylmaléimides, tels que le N-phénylmaléimide, le N-méthylphénylmaléimide et le N-chlorophénylmaléimide. De préférence, le monomère maléimide N-substitué est le N-phénylmaléimide.

La teneur en monomère maléimide N-substitué va de préférence de 45 à 55% en poids par rapport au poids total du terpolymère P.

Le monomère vinylique est de préférence choisi dans le groupe constitué par le styrène, l'o-méthylstyrène, le m-méthylstyrène, le p-méthylstyrène, le 2,4-diméthylstyrène, l'éthylstyrène, le p-tert-butylstyrène, l'α-méthylstyrène et l'α-méthyl-p-méthylstyrène. De préférence, le monomère vinylique est le styrène.

La teneur en monomère vinylique va de préférence de 40 à 50% en poids par rapport au poids total du terpolymère P.

Le monomère d'anhydride d'acide dicarboxylique insaturé est de préférence choisi parmi l'anhydride maléique, l'anhydride itaconique, l'anhydride citraconique et l'anhydride aconitique. De préférence, le monomère d'anhydride d'acide dicarboxylique insaturé est l'anhydride maléique.

La teneur en monomère d'anhydride d'acide dicarboxylique insaturé va de préférence de 5 à 10% en poids par rapport au poids total du terpolymère P.

De préférence, le terpolymère P présente une masse molaire moyenne en poids comprise entre 70 000g/mol et 300 000g/mol et/ou une température de transition vitreuse comprise entre 184°C et 197°C.

De préférence, le terpolymère P est un terpolymère N-phénylmaléimide-styrène-anhydride maléique.

Le terpolymère N-phénylmaléimide-styrène-anhydride maléique comprend de préférence de 45 à 55% en poids de N-phénylmaléimide, de 40 à 50% en poids de styrène et de 5 à 10% en poids d'anhydride maléique.

A titre d'exemple, le terpolymère N-phénylmaléimide-styrène-anhydride maléique peut être choisi parmi les terpolymères N-phénylmaléimide-styrène-anhydride maléique commerciaux disponibles sous la référence DENKA^{®} IP MS-CP ou DENKA^{®} IP MS-NJP, de la société DENKA.

### Polyalphaméthylstyrène

La composition selon l'invention peut comprendre un additif haute tenue thermique comprenant un polyalphaméthylstyrène.

A titre d'exemple, l'additif haute tenue thermique comprenant un polyalphaméthylstyrène peut être le produit commercial disponible sous les références ACMA00017077 et ACM9011114 de la société Alpha chemistry, ou le produit commercial disponible sous la référence M-80 de la société Jiasheng High-Tech Modified Material Co.,Ltd.

### Additif modificateur d'impact

Par additif modificateur d'impact, on entend un composé chimique qui, lorsqu'il est mélangé à un polymère, rend ledit polymère plus résistant aux chocs. Un additif modificateur d'impact est en particulier un matériau polymérique améliorant les propriétés d'impact d'un polymère, par exemple la résistance au choc IZOD avec entaille à 23°C, tel que déterminé selon la norme ISO 180 (version de 2019). Ce terme est également connu sous les dénominations "modificateurs au choc" ou "additifs choc" ou encore "modificateurs choc". Ce terme est bien connu de l'homme du métier.

De préférence, selon l'invention, un additif modificateur d'impact est un additif qui permet à un polymère comprenant 5% en poids de cet additif, par rapport au poids total de mélange polymère-additif, de présenter un taux d'augmentation de sa résistance au choc supérieur ou égal à 1,2 , préférentiellement supérieur ou égal à 1,5, plus préférentiellement supérieur ou égal à 2,0.

Ainsi, de préférence, l'additif modificateur d'impact permet d'augmenter d'au moins 10% la résistance au choc IZOD d'une composition consistant en le polymère recyclé et 5% en poids dudit additif modificateur d'impact.

Des exemples d'additifs modificateurs d'impact appropriés comprennent par exemple des polymères greffés, des polymères à noyau et enveloppe et des copolymères séquencés. Ces polymères peuvent être obtenus à partir d'au moins un monomère choisi dans le groupe constitué par un alcène, un alcadiène, un arène et un acrylate.

De préférence, l'additif modificateur d'impact est un copolymère obtenu à partir d'au moins un monomère vinylique.

Par copolymère, on entend un polymère issu de la copolymérisation d'au moins deux types de monomères ou plus, chimiquement différents, appelés comonomères.

Par monomère vinylique, on entend une molécule organique comprenant au moins une double liaison carbone-carbone. De préférence, le monomère vinylique présente la formule suivante : CH₂=CRR', avec R et R' étant indépendemment choisis dans le groupe constitué d'un atome d'hydrogène, un groupement aromatique, de préférence un phényle, un groupement hydrocarboné comprenant de 1 à 10 atomes de carbone, de préférence de 2 à 10 atomes de carbones, saturé ou insaturé, comprenant en outre éventuellement un groupement ester, un groupement nitrile, un groupement carboxyle, un groupement amine ou un groupement amide.

De préférence, l'additif modificateur d'impact est un copolymère d'éthylène et/ou de styrène, c'est-à-dire qu'au moins un des comonomères du copolymère est choisi parmi le styrène et l'éthylène.

De préférence, l'additif modificateur d'impact comprend un copolymère issu de la copolymérisation d'au moins deux monomères choisis dans le groupe constitué d'un alcène en C2-C8, d'un diène en C4-C8, d'un monomère styrénique et d'un monomère acrylique.

Préférentiellement, l'additif modificateur d'impact comprend un copolymère issu de la copolymérisation d'au moins deux monomères choisis dans le groupe constitué de l'éthylène, du butène, du styrène, du butadiène, de l'acrylonitrile, du (méth)acrylate de (m)éthyle et du (méth)acrylate de butyle .

Dans certains modes de réalisation, l'additif modificateur d'impact est fonctionnalisé ou greffé. Le copolymère d'éthylène fonctionnalisé ou greffé peut comprendre des composés polaires, comprenant par exemple une fonction anhydride ou époxy, de préférence cycliques, préférentiellement l'anhydride maléique ou le (méth)acrylate de glycidyle.

De préférence, l'additif modificateur d'impact est choisi parmi :
- les copolymères d'éthylène et/ou de butène et d'un monomère polaire choisi parmi l'acrylate de (m)éthyle, le méthacrylate de (m)éthyle et le (méth)acrylate de butyle,
- les copolymères acrylonitrile-butadiène-styrène modifiés présentant un taux de butadiène supérieur ou égal à 60% en poids par rapport au poids total du polymère acrylonitrile-butadiène-styrène modifié,
- les copolymères styrène-éthylène/butène-styrène greffés par de l'anhydride maléique ou du méthacrylate de glycidyle,
- les copolymères éthylène-acrylate de butyle, éventuellement greffés par de l'anhydride maléique,
- les copolymères styrène-butadiène, de préférence les copolymères styrène-butadiène à blocs, de préférence les copolymères styrène-butadiène multiblocs ou diblocs,
- les copolymères styrène-éthylène/butène-styrène, de préférence les copolymères styrène-éthylène/butène-styrène à blocs,
   et
- l'un quelconque de leurs mélanges.

A titre d'exemple de copolymère styrène-éthylène/butène-styrène fonctionnalisé par de l'anhydride maléique, on peut citer le produit référencé SEBS-g-MA^{®} de la société Kraton Polymer.

A titre d'exemple de copolymères styrène-éthylène/butène-styrène greffés par de l'anhydride maléique, on peut citer le produit référencé C1010^{®} de la société Kraton Polymer.

A titre d'exemple de copolymères styrène-éthylène/butène-styrène greffés par du méthacrylate de glycidyle, on peut citer le produit référencé 02520 C^{®} de la société Graft polymer.

A titre d'exemple de copolymères éthylène-acrylate de butyle, on peut citer le produit Lucofin^{®} 1400PN de la société Lucobit.

A titre d'exemple de copolymères éthylène-acrylate de butyle greffés par de l'anhydride maléique, on peut citer le produit Lucofin^{®} 1492 MGH de la société Lucobit.

A titre d'exemple de copolymère styrène-butadiène, on peut citer le produit référencé SBS-C3000^{®} de la société Kraton Polymer ou le produit référencé DENKA NSBC^{®} de la société DENKA.

A titre d'exemple de copolymère styrène-éthylène/butène-styrène, on peut citer le produit référencé SBS-C2000^{®} de la société Kraton Polymer.

### Copolymères d'éthylène et/ou de butène et d'un monomère polaire choisi parmi l'acrylate de (m)éthyle, le méthacrylate de (m)éthyle et le (méth)acrylate de butyle

### (M)éthyle signifie groupement méthyle ou éthyle.

### (Méth)acrylate signifie acrylate ou méthacrylate.

De préférence, le copolymère d'éthylène et/ou de butène et d'un monomère polaire choisi parmi l'acrylate de (m)éthyle, le méthacrylate de (m)éthyle et le (méth)acrylate de butyle est un copolymère d'éthylène et d'un monomère polaire choisi parmi l'acrylate de (m)éthyle et le méthacrylate de (m)éthyle.

De préférence, le copolymère d'éthylène et/ou de butène et d'un monomère polaire choisi parmi l'acrylate de (m)éthyle, le méthacrylate de (m)éthyle et le (méth)acrylate de butyle est un copolymère aléatoire. Un tel copolymère peut être préparé à haute pression à partir d'un mélange d'éthylène et/ou de butène et de monomère polaire choisi parmi l'acrylate de (m)éthyle, le méthacrylate de (m)éthyle et le (méth)acrylate de butyle en présence d'un initiateur de polymérisation radicalaire.

Le copolymère d'éthylène et d'un monomère polaire choisi parmi l'acrylate de (m)éthyle et le méthacrylate de (m)éthyle comprend de préférence de 5 à 30 % en masse, de préférence de 10% à 30% en masse, de préférence encore de 15% à 31% en masse de monomère polaire par rapport à la masse totale du copolymère, et de 70 à 95% en masse d'éthylène, de préférence de 70% à 90% en masse, de préférence encore de 69 à 85% en masse par rapport à la masse totale du copolymère.

De préférence, le copolymère d'éthylène et/ou de butène et d'un monomère polaire choisi parmi l'acrylate de (m)éthyle, le méthacrylate de (m)éthyle et le (méth)acrylate de butyle est un copolymère d'éthylène et d'acrylate de méthyle.

A titre d'exemple de copolymère d'éthylène et/ou de butène et d'un monomère polaire choisi parmi l'acrylate de (m)éthyle, le méthacrylate de (m)éthyle et le (méth)acrylate de butyle, on peut citer les copolymères éthylène/méthylacrylate commerciaux disponibles sous la référence Lotryl ^{®}29MA03T, de la société SK Functional Polymer, les copolymères Elvaloy^{®} (AC1125, AC12024 S, AC1330) de la société Dow, ou les produits EMAC^{®} SP2260, EMAC^{®} SP2403, EMAC^{®} SP2268 de la société Westlake.

### Polymère acrylonitrile butadiène styrène modifié présentant un taux de butadiène supérieur ou égale à 60% en poids

De préférence, le polymère acrylonitrile butadiène styrène modifié présentant un taux de butadiène supérieur ou égale à 60% en poids comprend un polymère acrylonitrile butadiène styrène modifié présentant un taux de butadiène allant de 60% à 80%, préférentiellement allant de 60% à 65% en masse par rapport à la masse totale du polymère acrylonitrile butadiène styrène modifié.

Ce polymère diffère donc notamment du polymère acrylonitrile-butadiène-styrène décrit ci-dessus en ce qu'il comprend une teneur plus élevée en butadiène (supérieure ou égale à 60% en poids).

A titre d'exemple de polymère acrylonitrile butadiène styrène modifié présentant un taux de butadiène supérieur ou égale à 60% en masse, on peut citer le produit référencé KUMHO^{®} HR 181 de la société Korea Kumho Petrochemical.

De préférence, l'additif modificateur d'impact est choisi parmi :
- les copolymères d'éthylène et/ou de butène et d'un monomère polaire choisi parmi l'acrylate de (m)éthyle, le méthacrylate de (m)éthyle et le (méth)acrylate de butyle,
- les copolymères acrylonitrile-butadiène-styrène modifiés présentant un taux de butadiène supérieur ou égal à 60% en poids par rapport au poids total du polymère acrylonitrile-butadiène-styrène modifié,
- les copolymères styrène-butadiène, de préférence les copolymères styrène-butadiène à blocs, de préférence les copolymères styrène-butadiène multiblocs ou diblocs, et
- l'un quelconque de leurs mélanges,
dans n'importe quelle combinaison de variantes définies ci-dessus pour chacun de ces copolymères.

L'additif modificateur d'impact comprend au moins un premier additif modificateur d'impact et un deuxième additif modificateur d'impact.

Le premier additif modificateur d'impact et le deuxième additif modificateur d'impact sont différents l'un de l'autre et sont de préférence chacun indépendamment un additif modificateur d'impact selon n'importe quelle variante définie ci-dessus.

De préférence, le premier additif modificateur d'impact et le deuxième additif modificateur d'impact sont différents l'un de l'autre et indépendamment choisis parmi :
- les copolymères d'éthylène et/ou de butène et d'un monomère polaire choisi parmi l'acrylate de (m)éthyle, le méthacrylate de (m)éthyle et le (méth)acrylate de butyle,
- les copolymères acrylonitrile-butadiène-styrène modifiés présentant un taux de butadiène supérieur ou égal à 60% en poids par rapport au poids total du polymère acrylonitrile-butadiène-styrène modifié,
- les copolymères styrène-butadiène, et
- l'un quelconque de leurs mélanges.
Toutes les variantes définies ci-dessus pour chacun de ces copolymères s'appliquent.

De préférence, le ratio entre la teneur massique totale en premier et deuxième additifs modificateur d'impact et la teneur massique en additif haute tenue thermique varie de 0,3 à 2,0, de préférence de 0,4 à 1,5, préférentiellement de 0,5 à 1,2, plus préférentiellement de 0,6 à 1,0, avantageusement de 0,65 à 0,85.

Le ratio entre la teneur massique en deuxième additif modificateur d'impact et la teneur massique en premier additif modificateur d'impact varie de 0,1 à 12, de préférence varie de 0,3 à 8,0, préférentiellement de 0,4 à 6,0, plus préférentiellement de 0,5 à 3,0.

De préférence, la teneur massique en premier additif modificateur d'impact varie de 2% à 18%, de préférence de 3% à 15%, préférentiellement de 4% à 12%, avantageusement de 4% à 8% en masse par rapport à la masse totale de la composition.

De préférence, la teneur massique en deuxième additif modificateur d'impact varie de 5% à 25%, de préférence de 6% à 20%, préférentiellement de 7% à 16%, avantageusement de 8% à 12% en masse par rapport à la masse totale de la composition.

Préférentiellement, le premier additif modificateur d'impact est choisi parmi les copolymères d'éthylène et/ou de butène et d'un monomère polaire choisi parmi l'acrylate de (m)éthyle, le méthacrylate de (m)éthyle et le (méth)acrylate de butyle et le deuxième additif modificateur d'impact est choisi parmi les copolymères acrylonitrile-butadiène-styrène modifiés présentant un taux de butadiène supérieur ou égal à 60% en poids par rapport au poids total du polymère acrylonitrile-butadiène-styrène modifié, ou
le premier additif modificateur d'impact est choisi parmi les copolymères styrène-butadiène et le deuxième additif modificateur d'impact est choisi parmi les copolymères d'éthylène et/ou de butène et d'un monomère polaire choisi parmi l'acrylate de (m)éthyle, le méthacrylate de (m)éthyle et le (méth)acrylate de butyle, et les copolymères acrylonitrile-butadiène-styrène modifiés présentant un taux de butadiène supérieur ou égal à 60% en poids par rapport au poids total du polymère acrylonitrile-butadiène-styrène modifié.

Avantageusement, le premier additif modificateur d'impact est un copolymère d'éthylène et de (méth)acrylate de (m)éthyle, de préférence un copolymère d'éthylène et d'acrylate de méthyle, et le deuxième additif modificateur d'impact est choisi parmi les copolymères acrylonitrile-butadiène-styrène modifiés présentant un taux de butadiène supérieur ou égal à 60% en poids par rapport au poids total du polymère acrylonitrile-butadiène-styrène modifié.

Toutes les variantes définies ci-dessus définies vis-à-vis de chacun de ces copolymères s'appliquent, ainsi que les toutes les variantes concernant les teneurs en premier et deuxième additif modificateur d'impact.

### Additifs anti-oxydant

La composition selon l'invention comprend au moins un additif anti-oxydant.

De préférence, les additifs anti-oxydants sont choisis dans le groupe constitué :
- des composés phénoliques encombrés, comme le triéthylène glycol bis[3-(3-t-butyl-5-méthyl-4-hydroxyphényl)propionate], le 1,6-hexanediol bis[3-(3,5-di-t-butyl-4-hydroxyphényl)propionate], le 2,4-bis(n-octylthio)-6-(4-hydroxy-3,5-di-t-butylanilino)-1,3,5-triazine, le tétrakis[3-(3,5-di-t-butyl-4-hydroxyphényl)propionate] de pentaérythrityle, le 2,2-thiodiéthylène bis[3-(3,5-di-t-butyl-4-hydroxyphényl)propionate], le 3-(3,5-di-t-butyl-4-hydroxyphényl)propionate d'octadécyle, le N,N'-hexaméthylène bis(3,5-di-t-butyl-4-hydroxy-hydrocinnamamide), le tétrakis(méthylène 3,5-di- tert-butyl-hydroxycinnamate)méthane, et le 3,5-di-tert-butylhydroxyhydrocinnamate d'octadécyle, de préférence est le N,N'-hexaméthylène bis(3,5-di-t-butyl-4-hydroxy-hydrocinnamamide),
- des organophosphites, comme le tétrakis(2,4-di-tert-butylphenyl) [1,1-biphenyl]-4,4'-diylbisphosphonite, le phosphite de tris(2,4-di-tert-butylphényl), le diphosphite de bis(2,4-di-tert-butylphenyl) pentaérythritol, le diphosphite de bis(2,4-dicumylphényl)pentaérytritol, le tris(nonyl phenyl)phosphite et le diphosphite de distéaryl pentaérythritol, de préférence est le phosphite de tris(2,4-di-tert-butylphényl).

A titre d'exemples d'additifs antioxydants, on peut citer les produits référencés IRGANOX 1076, IRGANOX 245 et IRGAFOS 168 FF de la société BASF.

De préférence, la teneur massique en antioxydant varie de 0,05% à 1%, de préférence de 0,1% à 0,5%, avantageusement de 0,15% à 0,25% en masse par rapport à la masse totale de la composition. La composition selon l'invention peut comprendre un antioxydant ou un mélange d'au moins deux antioxydants. Lorsque la composition comprend au moins deux antioxydants, la teneur en antioxydant ci-dessus représente la teneur totale en antioxydants.

De préférence, lorsque la composition comprend au moins deux antioxydants, elle comprend au moins un composé phénolique et un composé organophosphite tels que listés ci-dessus. Préférentiellement, le ratio massique entre le(les) composé(s) phénolique(s) et le(s) composé(s) organophosphite va de 1:1 à 1:4.

Avantageusement, l'additif antioxydant de la composition selon l'invention comprend un mélange de N,N'-hexaméthylène bis(3,5-di-t-butyl-4-hydroxy-hydrocinnamamide) et de phosphite de tris(2,4-di-tert-butylphényl).

La présente invention concerne également un procédé de préparation d'une composition selon l'invention, comprenant :
- une étape de mélange d'un polymère acrylonitrile-butadiène-styrène ou d'un dérivé de polymère acrylonitrile-butadiène-styrène, d'un additif haute tenue thermique sous la forme d'un terpolymère d'un monomère maléimide N-substitué, d'un monomère vinylique et d'un monomère d'anhydride d'acide dicarboxylique insaturé, d'au moins un premier additif modificateur d'impact et un deuxième additif modificateur d'impact, et d'au moins un additif anti-oxydant, la teneur massique totale en additifs modificateur d'impact allant de 8% à 35% par rapport à la masse totale de la composition, et le ratio entre la teneur massique en deuxième additif modificateur d'impact et la teneur massique en premier additif modificateur d'impact allant de 0,1 à 12.

Toutes les définitions et modes de réalisations préférés décrits dans la description ci-dessus s'appliquent.

L'étape de mélange s'effectue de préférence à une température comprise entre 235 et 290°C. L'étape de mélange doit être réalisée à l'aide d'une extrudeuse équipée d'une bi-vis co-rotative.

Lors de l'injection de pièces moulées, la température de l'appareillage vis-fourreau de la presse à injecter doit être compris entre 220°C et 250°C au moment de l'injection. La température du moule préconisée au cours de l'injection est comprise entre 40 et 70°C.

La présente invention concerne également l'utilisation d'une composition selon l'invention pour la fabrication d'une pièce, par exemple d'une pièce de véhicule, de préférence de véhicule automobile.

La présente invention concerne aussi une méthode de fabrication d'une pièce, de préférence d'une pièce de véhicule, de préférence de véhicule automobile, comprenant le moulage d'une composition selon l'invention.

La présente invention concerne également une pièce, de préférence une pièce de véhicule, de préférence de véhicule automobile, comprenant une composition selon l'invention.

La pièce de véhicule est par exemple un feu arrière d'automobile, une pièce sous capot, une pièce intérieure du véhicule, une pièce de l'habitacle.

La composition peut également avoir être utilisée pour fabriquer des pièces dans les domaines électrique et électronique, par exemple une box de téléphonie.

La présente invention concerne également un procédé d'amélioration d'au moins une propriété thermique ou mécanique d'un polymère acrylonitrile-butadiène-styrène recyclé ou d'un dérivé de polymère acrylonitrile-butadiène-styrène recyclé comprenant l'ajout au polymère acrylonitrile-butadiène-styrène recyclé ou au dérivé de polymère acrylonitrile-butadiène-styrène recyclé d'une composition comprenant :
- un additif haute tenue thermique sous la forme d'un terpolymère d'un monomère maléimide N-substitué, d'un monomère vinylique et d'un monomère d'anhydride d'acide dicarboxylique insaturé,
- au moins premier un additif modificateur d'impact et un deuxième additif modificateur d'impact, et
- au moins un additif anti-oxydant,
pour obtenir une composition de polymère acrylonitrile-butadiène-styrène recyclé ou de dérivé de polymère acrylonitrile-butadiène-styrène recyclé présentant une teneur massique totale en additifs modificateur d'impact allant de 8% à 35% par rapport à la masse totale de la composition de polymère acrylonitrile-butadiène-styrène recyclé ou de dérivé de polymère acrylonitrile-butadiène-styrène recyclé.

Toutes les définitions et modes de réalisations préférés décrits dans la description ci-dessus s'appliquent.

De préférence, le procédé d'amélioration d'au moins une propriété thermique ou mécanique d'un polymère acrylonitrile-butadiène-styrène recyclé ou d'un dérivé de polymère acrylonitrile-butadiène-styrène recyclé est un procédé d'amélioration du module de flexion à 23°C et/ou de la résistance au choc IZOD et/ou de la température de fléchissement sous charge et/ou du point de ramollissement Vicat du polymère acrylonitrile-butadiène-styrène recyclé ou du dérivé de polymère acrylonitrile-butadiène-styrène recyclé, préférentiellement jusqu'à des valeurs telles que définies dans la présente description.

La présente invention concerne aussi l'utilisation d'une combinaison de :
- un additif haute tenue thermique sous la forme d'un terpolymère d'un monomère maléimide N-substitué, d'un monomère vinylique et d'un monomère d'anhydride d'acide dicarboxylique insaturé,
- au moins un premier additif modificateur d'impact et un deuxième additif modificateur d'impact, le ratio entre la teneur massique en deuxième additif modificateur d'impact et la teneur massique en premier additif modificateur d'impact allant de 0,1 à 12, et
- au moins un additif anti-oxydant,
pour améliorer au moins une propriété thermique ou mécanique d'un polymère acrylonitrile-butadiène-styrène recyclé ou d'un dérivé de polymère acrylonitrile-butadiène-styrène recyclé, et obtenir une composition de polymère acrylonitrile-butadiène-styrène recyclé ou de dérivé de polymère acrylonitrile-butadiène-styrène recyclé présentant une teneur massique totale en additifs modificateur d'impact allant de 8% à 35% par rapport à la masse totale de la composition de polymère acrylonitrile-butadiène-styrène recyclé ou de dérivé de polymère acrylonitrile-butadiène-styrène recyclé.

Toutes les définitions et modes de réalisations préférés décrits dans la description ci-dessus s'appliquent.

De préférence, l'utilisation de la combinaison d'additifs pour améliorer au moins une propriété thermique ou mécanique d'un polymère acrylonitrile-butadiène-styrène recyclé ou d'un dérivé de polymère acrylonitrile-butadiène-styrène recyclé améliore le module de flexion à 23°C et/ou la résistance au choc IZOD et/ou la température de fléchissement sous charge et/ou le point de ramollissement Vicat du polymère acrylonitrile-butadiène-styrène recyclé ou du dérivé de polymère acrylonitrile-butadiène-styrène recyclé, préférentiellement jusqu'à des valeurs telles que définies dans la présente description.

L'invention va maintenant être décrite grâce aux exemples suivants, non limitatifs.

### EXEMPLES

Dans tous les exemples suivants, les compositions ont été préparées comme suit :
La matière broyée ABS recyclé (aussi appelé ABS post-consommation) est mélangée mécaniquement à l'additif haute tenue thermique dans un premier temps. Lors du compoundage, le ou les additifs modificateurs d'impact ainsi que les anti-oxydants sont ajoutés grâce à des trémies doseuses.

Dans tous les exemples suivants, les différentes propriétés thermomécaniques des compositions ont été déterminée suivant les normes suivantes :
IZOD : ISO 180 (version de 2019) ;
Module de flexion : ISO 178 (version de 2019) ;
VICAT : ISO 306 (version de 2013) sont réalisées suivant les conditions B50 50N ;
HDT : ISO 75-2A (version de 2013) réalisées suivant les conditions suivantes : les éprouvettes ont été recuites à 80°C pendant 4h. Le poids utilisé pour la mesure du HDT est 1,8 MPa.

### Exemple 1 : Influence de la quantité et des caractéristiques de l'additif de tenue thermique

Dans un premier temps, plusieurs compositions comprenant uniquement un additif de tenue thermique, dans des teneurs différentes, ont été préparées. Ces compositions ne sont donc pas selon l'invention, mais la détermination de l'IZOD et du HDT de ces compositions a permis de déterminer une plage de teneur en additif de tenue thermique permettant de conférer aux compositions une bonne tenue thermique sans trop dégrader leurs propriétés mécaniques.

### Cas n°1 : utilisation du DENKA IP MS-NJP

Dans les compositions du tableau 1 ci-dessous, les matériaux et additifs suivants ont été utilisés :
ABS : ABS recyclé EGR0064
Additif tenue thermique 1 : DENKA IP MS-NJP^{®}
Anti-oxydant : 0,2% (mélange équimassique d'Irganox 1076^{®} et d'Irganox 168^{®})
Température d'extrusion : 270°C
Température d'injection : 250°C

**[Table 1]**

| Ref | Additif tenue thermique 1 (% mass) | Additif modificateur d'impact 1 (% mass) | Additif modificateur d'impact 2 (% mass) | **IZOD entaillé 23°C (kJ/m²)** | **Module de flexion 23°C (MPa)** | **VICAT (°C)** | **HDT (°C)** |
|---|---|---|---|---|---|---|---|
| C1-0* | - | - | - | 7,9 | 2520 | 92,5 | 91 |
| C1-1* | 20 | - | - | 4,1 | 2880±30 | 102 | 99 |
| C1-2* | 25 | - | - | 3,7 | 2935±25 | 109 | 103 |
| C1-3* | 35 | - | - | 3,2 | 3100±37 | 115 | 111 |

Une teneur en additif tenue thermique comprise entre 20% et 25% en poids permet d'obtenir un bon compromis concernant les propriétés mécanique et thermique de la composition.

### Cas n°2 : utilisation du DENKA IP MS-CP

Dans les compositions du tableau 2 ci-dessous, les matériaux et additifs suivants ont été utilisés :
ABS : ABS recyclé EGR0064
Additif tenue thermique 2 : DENKA IP MS-CP^{®}
Anti-oxydant : 0,2% (mélange équimassique d'Irganox 1076^{®} et d'Irganox 168^{®})
Température d'extrusion : 235°C
Température d'injection : 220°C

**[Table 2]**

| Ref | Additif tenue thermique 2 (% mass) | Additif modificateur d'impact 1 (% mass) | Additif modificateur d'impact 2 (% mass) | **IZOD entaillé 23°C (kJ/m²)** | **Module de flexion 23°C (MPa)** | **VICAT (°C)** | **HDT (°C)** |
|---|---|---|---|---|---|---|---|
| C1-4* | - | - | - | 7,9 | 2520 | 92,5 | 91 |
| C1-5* | 5 | - | - | 6,7±0,3 | 2500±60 | - | 94,5±0,5 |
| C1-6* | 10 | - | - | 5,6±0,2 | 2650±22 | - | 96,6±0,2 |
| C1-7* | 15 | - | - | 5,4±0,1 | 2660±13 | - | 98,8±0,3 |
| C1-8* | 20 | - | - | 5±0,1 | 2800±38 | - | 100,7±0,6 |

L'utilisation de l'IP MS-CP permet d'augmenter la résistance aux chocs par rapport à l'IP MS-NJP avec un module de flexion plus faible. La valeur de l'HDT est plus élevée avec cette référence : à 20%, 100,7°C +/- 0,6 avec IP MS-CP contre 99°C pour IP MS-NJP.

### Exemple 2 : Compositions comprenant un additif tenue thermique et un additif modificateur d'impact

Dans les compositions du tableau 3 ci-dessous, les matériaux et additifs suivants ont été utilisés :
ABS : ABS recyclé EGR0064
Additif tenue thermique 1 : DENKA IP MS-NJP^{®}
Additif tenue thermique 2 : DENKA IP MS-CP^{®}
Additif modificateur d'impact 1 : Lotryl 29MA03T^{®}
Additif modificateur d'impact 2 : HR-181^{®}
Additif modificateur d'impact 3 : C3000^{®}
Anti-oxydant : 0,2% (mélange équimassique d'Irganox 1076^{®} et d'Irganox 168^{®})
Température d'extrusion : 270°C
Température d'injection : 250°C

**[Table 3]**

| Ref | Additif tenue thermique (% mass) | Additif modificateur d'impact 1 (% mass) | Additif modificateur d'impact 2 (% mass) | Additif modificateur d'impact 3 (% mass) | **IZOD entaillé 23°C (kJ/m²)** | **Module de flexion 23°C (MPa)** | **VICAT (°C)** | **HDT (°C)** |
|---|---|---|---|---|---|---|---|---|
| C2-0* | 0 | 0 | 0 | - | 7,9 | - | - | 91 |
| C2-1 | Additif tenue thermique 1 (15%) | 8 | - | - | 9,1 ± 0,2 | 2590 ± 20 | 105 | 95,9 ± 0,1 |
| C2-2 | Additif tenue thermique 1 (15%) | 10 | - | - | 9,3 ± 0,2 | 2540 ± 30 | 104 | 95,7 ± 0,2 |
| C2-3 | Additif tenue thermique 1 (15%) | 12 | - | - | 10,4 ± 0,2 | 2370 ± 30 | 102 | 95,3 ± 0,2 |
| C2-4 | Additif tenue thermique 1 (25%) | 24 | - | - | 7 | 1970 ± 19 | 69,1±1,3 | 101,3 ± 0,6 |
| C2-5 | Additif tenue thermique 1 (25%) | - | 24 | - | 9,7 | 2200 ± 15 | 105,3±0,6 | 98,7 ± 0,2 |
| C2-6 | Additif tenue thermique 2 (20%) | - | - | 15 | 4,8 ± 0,7 | 2110 ± 10 | - | 99,8 ± 0,3 |

### Exemple 3 : Compositions selon l'invention comprenant un additif tenue thermique et deux additifs modificateurs d'impact

Dans les compositions du tableau 4 ci-dessous, les matériaux et additifs suivants ont été utilisés :
ABS : ABS recyclé EGR0064
Additif tenue thermique 1 : DENKA IP MS-NJP^{®}
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})
Température d'extrusion : 270°C
Température d'injection : 250°C

**[Table 4]**

| Ref | Additif tenue thermique 1 (% mass) | Additif modificateur d'impact 1 (% mass) | Additif modificateur d'impact 2 (% mass) | Additif modificateur d'impact 2 / Additif modificateur d'impact 1 | **IZOD entaillé 23°C (kJ/m²)** | **Module de flexion 23°C (MPa)** | **VICAT (°C)** | **HDT (°C)** |
|---|---|---|---|---|---|---|---|---|
| C3-1 | 25 | 24 | - | 0 | 7 | 1970 ± 19 | 69,1±1,3 | 101,3 ± 0,6 |
| C3-2 | 25 | 16 | 8 | 0,5 | 7,7 | 2180 ± 32 | 94,4±0,6 | 104 ± 0,6 |
| C3-3 | 25 | 12 | 12 | 1 | 8,2 | 2280 ± 20 | 100,2±0,7 | 102 ± 1 |
| C3-4 | 25 | 8 | 16 | 2 | 11,3 | 2060 ± 10 | 103 | 99 |
| C3-5 | 25 | - | 24 | - | 9,7 | 2200 ± 15 | 105,3±0,6 | 98,7 ± 0,2 |
| C3-6 | 15 | 7,5 | 7,5 | 1 | 15,4 ± 0,2 | 2180 ± 20 | - | 96,5 ± 0,2 |
| C3-7 | 20 | 5 | 10 | 2 | 10,5 | 2330 ± 20 | - | 99,1 ± 0,2 |
| C3-8 | 20 | 7,5 | 7,5 | 1 | 10,3 | 2330 ± 20 | - | 99,1 ± 0,2 |
| C3-9 | 25 | 5 | 15 | 3 | 12,1± 0,2 | 2190 ± 20 | - | 99,7 ± 0,1 |
| C3-10 | 25 | 8 | 16 | 2 | 11,3 | 2060 | - | 98,9 ± 0,9 |
| C3-11 | 25 | 7 | 15 | 2,1 | 10,6 | 2100 | - | 99,2 ± 0,3 |

A quantité totale d'additif modificateur d'impact équivalente, les compositions C3-2, C3-3 et C3-4 présentent une encore meilleure tenue mécanique que la composition C3-1, qui ne comprend qu'un seul additif modificateur d'impact. De plus, à quantité totale d'additif modificateur d'impact équivalente, les compositions C3-2, C3-3 et C3-4 présentent une température de fléchissement sous charge encore plus élevée que la composition C3-5, qui ne comprend qu'un seul additif modificateur d'impact.

Lorsque le ratio additif modificateur d'impact 2 / additif modificateur d'impact 1 est supérieur ou égal à 2, un effet de synergie entre les deux additifs modificateurs d'impact est observé. Par exemple, la résistance au choc de la composition C3-4 selon l'invention est encore meilleure que celles des compositions C3-1 et C3-5, qui ne comprennent qu'un seul additif modificateur d'impact.

Dans les compositions du tableau 5 ci-dessous, les matériaux et additifs suivants ont été utilisés :
ABS : ABS recyclé EGR0064
Additif tenue thermique 2 : DENKA IP MS-CP^{®}
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})
Température d'extrusion : 235°C
Température d'injection : 220°C

**[Table 5]**

| Ref | Additif tenue thermique 2 (% mass) | Additif modificateur d'impact 1 (% mass) | Additif modificateur d'impact 2 (% mass) | Additif modificateur d'impact 2 / Additif modificateur d'impact 1 | **IZOD entaillé 23°C (kJ/m²)** | **Module de flexion 23°C (MPa)** | **HDT (°C)** |
|---|---|---|---|---|---|---|---|
| C3-12 | 15 | 15 | - | 0 | 12,5 ± 0,2 | 2160 ± 9 | 93,6 ± 0,6 |
| C3-13 | 15 | 11,25 | 3,75 | 0,33 | 14,4 ± 0,4 | 2120 ± 32 | 97,2 ± 0,3 |
| C3-14 | 15 | 10 | 5 | 0,5 | 14,8 ± 0,3 | 2120 ± 10 | 97,5 ± 0,3 |
| C3-15 | 15 | 7,5 | 7,5 | 1 | 14,7 ± 0,3 | 2140 ± 22 | 97,4 ± 0,6 |
| C3-16 | 15 | 5 | 10 | 2 | 13,9 ± 0,3 | 2260 ± 14 | 95,8 ± 0,4 |
| C3-17 | 15 | 3,75 | 11,25 | 3 | 14,6 ± 0,1 | 2200 ± 19 | 95 ± 0,5 |
| C3-18 | 15 | - | 15 | - | 11,6 ± 0,2 | 2310 ± 7 | 94,3 ± 0,3 |

Quel que soit le ratio additif modificateur d'impact 2 / additif modificateur d'impact 1, un effet de synergie entre les deux additifs modificateur d'impact est observé, par rapport à la résistance au choc et par rapport à la teneur thermique.

Dans les compositions du tableau 6 ci-dessous, les matériaux et additifs suivants ont été utilisés :
ABS : ABS recyclé EGR0064
Additif tenue thermique 2 : DENKA IP MS-CP^{®}
Additif modificateur d'impact 1 : Lotryl 29MA03T^{®}
Additif modificateur d'impact 2 : HR-181^{®}
Additif modificateur d'impact 3 : C3000^{®}
Anti-oxydant : 0,2% (mélange équimassique d'Irganox 1076^{®} et d'Irganox 168^{®})
Température d'extrusion : 235°C
Température d'injection : 220°C

**[Table 6]**

| Ref | Additif tenue thermique 2 (% mass) | Additif modificateur d'impact 1 (% mass) | Additif modificateur d'impact 2 (% mass) | Additif modificateur d'impact 3 (% mass) | Ratio deuxième additif modificateur d'impact/ premier additif modificateur d'impact | **IZOD entaillé 23°C (kJ/m²)** | **Module de flexion 23°C (MPa)** | **HDT (°C)** |
|---|---|---|---|---|---|---|---|---|
| C3-19 | 20 | - | - | 15 | - | 4,8 ± 0,7 | 2110 ± 10 | 99,8 ± 0,3 |
| C3-20 | 20 | 10 | - | 5 | 2 | 10,3 ± 0,5 | 2120 ± 27 | 99 ± 0,4 |
| C3-21 | 18 | - | 10 | 5 | 2 | 10,3 ± 0,3 | 2310 ± 12 | 98,1 ± 0,3 |
| C3-22 | 20 | - | 10 | 5 | 2 | 10 ± 0,4 | 2230 ± 9 | 98,9 ± 0,4 |
| C3-23 | 20 | - | 13,3 | 6,7 | 2 | 11 ± 0,4 | 2060 ± 2 | 98,4 ± 0,2 |

L'additif HR-181^{®} donne à la formulation un module de flexion plus élevé d'environ 200MPa que le Lotryl29MA03T^{®} et engendre une diminution de la valeur de l'HDT d'1°C.

Augmenter la quantité d'additif choc permet d'augmenter la résistance aux chocs mais fait diminuer le HDT.

### Exemple 4 : Influence du ratio entre la quantité totale d'additifs modificateur d'impact et la quantité d'additif tenue thermique

Dans les compositions du tableau 7 ci-dessous, les matériaux et additifs suivants ont été utilisés :
ABS : ABS recyclé EGR0064
Additif tenue thermique 1 : DENKA IP MS-NJP^{®}
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})$Ratio Additif modificateur d ' impact 2 / Additif modificateur d ' impact 1 = 2$
Température d'extrusion : 270°C
Température d'injection : 250°C

**[Table 7]**

| Ref | Additif tenue thermique 1 (% mass) | Additif modificateur d'impact 1 (% mass) | Additif modificateur d'impact 2 (% mass) | Ratio massique (Additifs modificateurs d'impact) / (tenue thermique 1) | **IZOD (kJ/m²)** | **Module de flexion (MPa)** | **VICAT (°C)** | **HDT (°C)** |
|---|---|---|---|---|---|---|---|---|
| C4-1 | 22 | 5,5 | 11 | **0,75** | 10,1±0,18 | 2310±21 | - | 99 ± 0,5 |
| C4-2 | 20 | 5 | 10 | **0,75** | 10,3 | 2330 | - | 99,1 |
| C4-3 | 25 | 7,33 | 14,67 | **0,88** | 10,6 | 2100 | - | 99,2 ± 0,3 |
| C4-4 | 25 | 8 | 16 | **0,96** | 11,3 | 2060±10 | - | |
| C4-5 | 20 | 6,67 | 13,33 | 1 | 10,8 | 2150 | 99,6±0,2 | 97,2±0,2 |
| C4-6 | 20 | 10 | 20 | **1,5** | 15,6 | 1830 | - | 96,4 |

Dans les compositions du tableau 8 ci-dessous, les matériaux et additifs suivants ont été utilisés :
ABS : ABS recyclé EGR0064
Additif tenue thermique 2 : DENKA IP MS-CP^{®}
Anti-oxydant : 0,2% (mélange équimassique d'Irganox 1076^{®} et d'Irganox 168^{®})
Température d'extrusion : 235°C
Température d'injection : 220°C$Ratio Affitif modificateur d ' impact 2 / Additif modificateur d ' impact 1 = 2$

**[Table 8]**

| Ref | Additif tenue thermique 2 (% mass) | Additif modificateur d'impact 1 (% mass) | Additif modificateur d'impact 2 (% mass) | Ratio massique (Additifs modificateurs d'impact) / (tenue thermique 2) | **IZOD entaillé 23°C (kJ/m²)** | **Module de flexion 23°C (MPa)** | **HDT (°C)** |
|---|---|---|---|---|---|---|---|
| C4-7 | 21 | | | 0,71 | 12±0,4 | 2330±20 | 99,6±0,4 |
| C4-8 | 17,5 | | | 0,86 | 12,7±0,3 | 2320±38 | 96,6±0,2 |
| C4-9 | 15 | 5 | 10 | 1 | 13,9±0,3 | 2260±14 | 95,8±0,4 |
| C4-10 | 12,5 | | | 1,2 | 15,8±0,4 | 2190±14 | 95,2±0,2 |
| C4-11 | 10 | | | 1,5 | 17±0,3 | 2170±12 | 91,6±0,2 |

Dans les compositions du tableau 9 ci-dessous, les matériaux et additifs suivants ont été utilisés :
ABS : ABS recyclé EGR0064
Additif tenue thermique 2 : DENKA IP MS-CP^{®}
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})
Température d'extrusion : 235°C
Température d'injection : 220°C$Ratio Affitif modificateur d ' impact 2 / Additif modificateur d ' impact 1 = 1$

**[Table 9]**

| Ref | Additif tenue thermique 2 (% mass) | Additif modificateur d'impact 1 (% mass) | Additif modificateur d'impact 2 (% mass) | Ratio massique (Additif modificateur d'impact) /(tenue thermique 2) | **IZOD (kJ/m²)** | **Module de flexion (MPa)** | **HDT (°C)** |
|---|---|---|---|---|---|---|---|
| C4-12 | 15 | 6 | 6 | **0,8** | 12,1±0,3 | 2320±28 | 98,9±0,3 |
| C4-13 | 15 | 7 | 7 | **0,93** | 13,7±0,3 | 2260±25 | 98,3±0,1 |
| C4-14 | 15 | 7,5 | 7,5 | **1** | 14,7±0,3 | 2140±22 | 97,4±0,6 |
| C4-15 | 15 | 8 | 8 | **1,07** | 14,2±0,3 | 2240±14 | 96,9±0,4 |

Le ratio (Additifs modificateurs d'impact) / (additif tenue thermique) influe sur le compromis entre la résistance mécanique et la résistance aux chocs des compositions selon l'invention. Le choix de sa valeur dépend des caractéristiques souhaitées pour la composition.

### Exemple 5 : Autres compositions selon l'invention

Dans les compositions de cet exemple, les matériaux et additifs suivants ont été utilisés :
ABS : ABS recyclé EGR0074
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})
Ratio Additif modificateur d'impact 2 / Additif modificateur d'impact 1 = 2
Température d'extrusion : 270°C
Température d'injection : 250°C

**[Table 10]**

| Ref | Additif tenue thermique | Additif tenue thermique (% mass) | Additif modific ateur d'impact 1 (% mass) | Additif modificat eur d'impact 2 (% mass) | Ratio massique (modificate urs d'impact) /(tenue thermique) | **IZOD (kJ/m² )** | **Module de flexion (MPa)** | **VICA T (°C)** | **HDT (°C)** |
|---|---|---|---|---|---|---|---|---|---|
| C5-1* | - | - | - | - | - | 12 | 2480 | 94,3 | 92,5 |
| C5-2 | **DENKA IP MS-NJP^{®}** | 20 | 5 | 10 | 0,75 | 10,4 ± 0,2 | 2330 ± 20 | - | 95,3 ± 0,4 |
| C5-3 | **DENKA IP MS-CP^{®}** | 20 | 5 | 10 | 0,75 | 11,5 ± 0,1 | 2280 ± 30 | - | 98,5 ± 0,5 |
| C5-4 | **DENKA IP MS-CP^{®}** | 20 | 4,33 | 8,67 | 0,65 | 10,9 ± 0,6 | 2380 ± 50 | - | 97,1 ± 1,6 |
| C5-5 | **DENKA IP MS-CP^{®}** | 22 | 5 | 10 | 0,75 | 10,3 ± 0,3 | 2340 ± 24 | - | 97,3 ± 0,9 |

Ces résultats montrent que différents types de terpolymères N-phénylmaléimide/styrène/anhydride maléique permettent d'obtenir des compositions selon l'invention présentant de très bonnes propriétés thermomécaniques.

### Exemple 6 : Influence de l'origine de l'ABS recyclé

Dans les compositions de cet exemple, les matériaux et additifs suivants ont été utilisés :
ABS : ABS recyclé EGR0064, EGR0074, PLS0153 BB36, PLS0163 BB1, PLS0160 BB21, EV4 003 BB1
Additif tenue thermique 2 : DENKA IP MS-CP^{®}
Additif modificateur d'impact 1 : Lotryl 29MA03T^{®}
Additif modificateur d'impact 2 : HR-181^{®}
Anti-oxydant : 0,2% (mélange équimassique d'Irganox 1076^{®} et d'Irganox 168^{®})
Température d'extrusion : 235°C
Température d'injection : 220°C

Dans les compositions de cet exemple, les proportions de chaque additif sont fixées. Seule la base ABS varie.
• %Additif tenue thermique : 21%
• %Additif modificateur d'impact 1 : 5%
• %Additif modificateur d'impact 2 : 10%
• Ratio Additif modificateur d'impact 2 / Additif modificateur d'impact 1 = 2

**[Table 11]**

| | **Propriétés des ABS recyclés (sans additif)** | | | **Propriétés des compositions** | | |
|---|---|---|---|---|---|---|
| Ref | **IZOD (kJ/m²)** | **Module de flexion (MPa)** | **HDT (°C)** | **IZOD (kJ/m²)** | **Module de flexion (MPa)** | **HDT (°C)** |
| EGR0064 | 7,6±0,2 | 2520±30 | 92,5±0,8 | 10,8±0,4 | 2350±18 | 99,3±0,2 |
| EGR0074 | 12±0,5 | 2480±34,5 | 93,5±0,3 | 11,6±0,2 | 2320±20 | 100±0,1 |
| PLS0153 BB36 | 10,9±0,2 | 2510±32 | 94±0,2 | 10,6±0,4 | 2350±22 | 100,5±0,8 |
| PLS0163 BB1 | 10,4±0,3 | 2540±29 | 92,5±0,1 | 10,4±0,4 | 2350±32 | 98,6±0,1 |
| PLS0160 BB21 | 11,4±0,3 | 2570±35 | 92,1±0,3 | 11,7±0,2 | 2320±11 | 98,9±0,7 |
| EV4 003 BB1 | 9,8±0,3 | 2540±15 | 92,5±0,3 | 11±0,2 | 2280±45 | 98,5±0,2 |

Selon l'origine de l'ABS recyclé, ses propriétés de résistance au choc et de tenue thermique peuvent varier significativement. Cependant, l'ajout combiné d'une additif haute teneur thermique et d'un additif modificateur d'impact tels que définis dans la présente demande permet d'améliorer les propriétés thermo-mécaniques de ces ABS recyclés, quelle que soit leur origine.

## Revendications

1. Composition comprenant :
- un polymère acrylonitrile-butadiène-styrène ou un dérivé de polymère acrylonitrile-butadiène-styrène,
- un additif haute tenue thermique sous la forme d'un terpolymère d'un monomère maléimide N-substitué, d'un monomère vinylique et d'un monomère d'anhydride d'acide dicarboxylique insaturé,
- au moins un premier additif modificateur d'impact et un deuxième additif modificateur d'impact, et
- au moins un additif anti-oxydant,
dans laquelle la teneur massique totale en additifs modificateur d'impact varie de 8% à 35% par rapport à la masse totale de la composition, et le ratio entre la teneur massique en deuxième additif modificateur d'impact et la teneur massique en premier additif modificateur d'impact varie de 0,1 à 12.

2. Composition selon la revendication 1, dans laquelle la teneur massique en additif haute tenue thermique varie de 15% à 35%, préférentiellement de 18% à 30%, avantageusement de 20% à 25% en masse par rapport à la masse totale de la composition.

3. Composition selon la revendication 1 ou 2, dans laquelle la teneur massique totale en additifs modificateur d'impact varie de 10% à 25%, préférentiellement de 12% à 20%, avantageusement de 13% à 18% en masse par rapport à la masse totale de la composition.

4. Composition selon l'une quelconque des revendications précédentes, dans laquelle le premier additif modificateur d'impact et le deuxième additif modificateur d'impact sont différents l'un de l'autre et indépendamment choisis parmi :
- les copolymères d'éthylène et/ou de butène et d'un monomère polaire choisi parmi l'acrylate de (m)éthyle, le méthacrylate de (m)éthyle et le (méth)acrylate de butyle,
- les copolymères acrylonitrile-butadiène-styrène modifiés présentant un taux de butadiène supérieur ou égal à 60% en poids par rapport au poids total du polymère acrylonitrile-butadiène-styrène modifié,
- les copolymères styrène-éthylène/butène-styrène greffés par de l'anhydride maléique ou du méthacrylate de glycidyle,
- les copolymères éthylène-acrylate de butyle, éventuellement greffés par de l'anhydride maléique,
- les copolymères styrène-butadiène, de préférence les copolymères styrène-butadiène à blocs, de préférence les copolymères styrène-butadiène multiblocs ou diblocs,
- les copolymères styrène-éthylène/butène-styrène, de préférence les copolymères styrène-éthylène/butène-styrène à blocs, et
- l'un quelconque de leurs mélanges.

5. Composition selon l'une quelconque des revendications précédentes, dans laquelle le ratio entre la teneur massique totale en premier et deuxième additifs modificateur d'impact et la teneur massique en additif haute tenue thermique varie de 0,3 à 2,0, de préférence de 0,4 à 1,5, préférentiellement de 0,5 à 1,2, plus préférentiellement de 0,6 à 1,0, avantageusement de 0,65 à 0,85.

6. Composition selon l'une quelconque des revendications précédentes, dans laquelle le ratio entre la teneur massique en deuxième additif modificateur d'impact et la teneur massique en premier additif modificateur d'impact varie de 0,3 à 8,0, préférentiellement de 0,4 à 6,0, plus préférentiellement de 0,5 à 3,0.

7. Composition selon l'une quelconque des revendications précédentes, dans laquelle la teneur massique en premier additif modificateur d'impact varie de 2% à 18%, de préférence de 3% à 15%, préférentiellement de 4% à 12%, avantageusement de 4% à 8% en masse par rapport à la masse totale de la composition.

8. Composition selon l'une quelconque des revendications précédentes, dans laquelle la teneur massique en deuxième additif modificateur d'impact varie de 5% à 25%, de préférence de 6% à 20%, préférentiellement de 7% à 16%, avantageusement de 8% à 12% en masse par rapport à la masse totale de la composition.

9. Composition selon l'une quelconque des revendications précédentes, dans laquelle le premier additif modificateur d'impact et le deuxième additif modificateur d'impact sont différents l'un de l'autre et indépendamment choisis parmi :
- les copolymères d'éthylène et/ou de butène et d'un monomère polaire choisi parmi l'acrylate de (m)éthyle, le méthacrylate de (m)éthyle et le (méth)acrylate de butyle,
- les copolymères acrylonitrile-butadiène-styrène modifiés présentant un taux de butadiène supérieur ou égal à 60% en poids par rapport au poids total du polymère acrylonitrile-butadiène-styrène modifié,
- les copolymères styrène-butadiène, et
- l'un quelconque de leurs mélanges.

10. Composition selon l'une quelconque des revendications précédentes, dans laquelle le polymère acrylonitrile-butadiène-styrène ou le dérivé de polymère acrylonitrile-butadiène-styrène est recyclé.

11. Procédé de préparation d'une composition selon l'une quelconque des revendications 1 à 10, comprenant :
- une étape de mélange d'un polymère acrylonitrile-butadiène-styrène ou d'un dérivé de polymère acrylonitrile-butadiène-styrène, d'un additif haute tenue thermique sous la forme d'un terpolymère d'un monomère maléimide N-substitué, d'un monomère vinylique et d'un monomère d'anhydride d'acide dicarboxylique insaturé, d'au moins un premier additif modificateur d'impact et un deuxième additif modificateur d'impact, le ratio entre la teneur massique en deuxième additif modificateur d'impact et la teneur massique en premier additif modificateur d'impact allant de 0,1 à 12, et d'au moins un additif anti-oxydant, pour obtenir une composition présentant une teneur massique totale en additifs modificateur d'impact allant de 8% à 35% par rapport à la masse totale de la composition.

12. Utilisation d'une composition selon l'une quelconque des revendications 1 à 10, pour la fabrication d'une pièce, par exemple d'une pièce de véhicule, de préférence de véhicule automobile.

13. Pièce, de préférence pièce de véhicule, de préférence de véhicule automobile, comprenant une composition selon l'une quelconque des revendications 1 à 10.

14. Procédé d'amélioration d'au moins une propriété thermique ou mécanique d'un polymère acrylonitrile-butadiène-styrène recyclé ou d'un dérivé de polymère acrylonitrile-butadiène-styrène recyclé comprenant l'ajout au polymère acrylonitrile-butadiène-styrène recyclé ou au dérivé de polymère acrylonitrile-butadiène-styrène recyclé d'une composition comprenant :
- un additif haute tenue thermique sous la forme d'un terpolymère d'un monomère maléimide N-substitué, d'un monomère vinylique et d'un monomère d'anhydride d'acide dicarboxylique insaturé,
- au moins un premier additif modificateur d'impact et un deuxième additif modificateur d'impact, le ratio entre la teneur massique en deuxième additif modificateur d'impact et la teneur massique en premier additif modificateur d'impact allant de 0,1 à 12, et
- au moins un additif anti-oxydant,
pour obtenir une composition de polymère acrylonitrile-butadiène-styrène recyclé ou de dérivé de polymère acrylonitrile-butadiène-styrène recyclé présentant une teneur massique totale en additifs modificateur d'impact allant de 8% à 35% par rapport à la masse totale de la composition de polymère acrylonitrile-butadiène-styrène recyclé ou de dérivé de polymère acrylonitrile-butadiène-styrène recyclé.

15. Utilisation d'une combinaison de :
- un additif haute tenue thermique sous la forme d'un terpolymère d'un monomère maléimide N-substitué, d'un monomère vinylique et d'un monomère d'anhydride d'acide dicarboxylique insaturé,
- au moins un premier additif modificateur d'impact et un deuxième additif modificateur d'impact, le ratio entre la teneur massique en deuxième additif modificateur d'impact et la teneur massique en premier additif modificateur d'impact allant de 0,1 à 12, et
- au moins un additif anti-oxydant,
pour améliorer au moins une propriété thermique ou mécanique d'un polymère acrylonitrile-butadiène-styrène recyclé ou d'un dérivé de polymère acrylonitrile-butadiène-styrène recyclé, et obtenir une composition de polymère acrylonitrile-butadiène-styrène recyclé ou de dérivé de polymère acrylonitrile-butadiène-styrène recyclé présentant une teneur massique totale en additifs modificateur d'impact allant de 8% à 35% par rapport à la masse totale de la composition de polymère acrylonitrile-butadiène-styrène recyclé ou de dérivé de polymère acrylonitrile-butadiène-styrène recyclé.

## Patentansprüche

1. Zusammensetzung, umfassend:
- ein Acrylnitril-Butadien-Styrol-Polymer oder ein Derivat von Acrylnitril-Butadien-Styrol-Polymer,
- ein Additiv mit hoher Wärmebeständigkeit in Form eines Terpolymers aus einem N-substituierten Maleimidmonomer, einem Vinylmonomer und einem Anhydridmonomer einer ungesättigten Dicarbonsäure,
- mindestens ein erster Schlagzähmodifikatorzusatz und ein zweiter Schlagzähmodifikatorzusatz, und
- mindestens ein Antioxidationsadditiv,
in der der gesamte Massenanteil an Schlagzähmodifikatoradditiven von 8% bis 35% variiert im Verhältnis zu der Gesamtmasse der Zusammensetzung, und das Verhältnis zwischen dem Massenanteil an zweitem Schlagzähmodifikatorzusatz und dem Massenanteil an erstem Schlagzähmodifikatorzusatz von 0,1bis 12 variiert.

2. Zusammensetzung gemäß Anspruch 1, in der der Massenanteil an Additiv mit hoher Wärmebeständigkeit von 15% bis 35%, bevorzugt von 18% bis 30%, variiert, vorteilhafterweise von 20% bis 25% Massenanteil im Verhältnis zu der Gesamtmasse der Zusammensetzung.

3. Zusammensetzung gemäß Anspruch 1 oder 2, in der der gesamte Massenanteil an Schlagzähmodifikatoradditiven von 10% bis 25%, bevorzugt von 12% bis 20%, vorteilhafterweise von 13% bis 18% Massenanteil im Verhältnis zu der Gesamtmasse der Zusammensetzung variiert.

4. Zusammensetzung gemäß einem beliebigen der vorhergehenden Ansprüche, in der der erste Schlagzähmodifikatorzusatz und der zweite Schlagzähmodifikatorzusatz voneinander verschieden sind und unabhängig ausgewählt sind aus:
- die Copolymere aus Ethylen und/oder Buten und einem polaren Monomer, ausgewählt aus dem (M)ethylacrylat, dem (M)ethylmethacrylat und dem Butyl(meth)acrylat,
- die modifizierten Acrylnitril-Butadien-Styrol-Copolymere, die einen Butadiengehalt aufweisen größer als oder gleich 60 Gew.-% im Verhältnis zu dem Gesamtgewicht des Polymers Acrylnitril-modifiziertes Butadien-Styrol,
- die Styrol-Ethylen/Butylen-Styrol-Copolymere, gepfropft mit Maleinsäureanhydrid oder Glycidylmethacrylat,
- die Ethylen-Butylacrylat-Copolymere, gegebenenfalls gepfropft mit Maleinsäureanhydrid,
- die Styrol-Butadien-Copolymere, vorzugsweise die Styrol-Butadien-Blockcopolymere, vorzugsweise die Styrol-Butadien-Multiblock- oder Diblockcopolymere,
- die Styrol-Ethylen/Butylen-Styrol-Copolymere, vorzugsweise die Copolymere Styrol-Ethylen/Butylen-Styrol-Blockcopolymere, und
- eine beliebige ihrer Mischungen.

5. Zusammensetzung gemäß einem beliebigen der vorhergehenden Ansprüche, in der das Verhältnis zwischen dem gesamten Massenanteil an erstem und zweitem Schlagzähmodifikatoradditiv und dem Massenanteil an Additiv mit hoher Wärmebeständigkeit variiert von 0,3 bis 2,0, vorzugsweise von 0,4 bis 1,5, bevorzugt von 0,5 bis 1,2, stärker bevorzugt von 0,6 bis 1,0, vorteilhafterweise von 0,65 bis 0,85.

6. Zusammensetzung gemäß einem beliebigen der vorhergehenden Ansprüche, in der das Verhältnis zwischen dem Massenanteil an zweitem Schlagzähmodifikatoradditiv und dem Massenanteil an erstem Schlagzähmodifikatoradditiv von 0,3 bis 8,0 variiert, bevorzugt von 0,4 bis 6,0, stärker bevorzugt von 0,5 bis 3,0.

7. Zusammensetzung gemäß einem beliebigen der vorhergehenden Ansprüche, in der der Massenanteil an erstem Schlagzähmodifikatoradditiv von 2% bis 18%, vorzugsweise von 3% bis 15%, bevorzugt von 4% bis 12%, vorteilhafterweise von 4% bis 8% massenmäßig im Verhältnis zu der Gesamtmasse der Zusammensetzung variiert.

8. Zusammensetzung gemäß einem beliebigen der vorhergehenden Ansprüche, in der der Massenanteil an zweitem Schlagzähmodifikatoradditiv von 5% bis 25%, vorzugsweise von 6% bis 20%, bevorzugt von 7% bis 16%, vorteilhafterweise von 8% bis 12% massenmäßig im Verhältnis zu der Gesamtmasse der Zusammensetzung variiert.

9. Zusammensetzung gemäß einem beliebigen der vorhergehenden Ansprüche, in der der erste Schlagzähmodifikatorzusatz und der zweite Modifikatorzusatz zur Schlagzähmodifikation voneinander verschieden sind und unabhängig ausgewählt sind aus:
- die Copolymere von Ethylen und/oder Buten und einem polaren Monomer, ausgewählt aus dem (M)ethylacrylat, dem (M)ethylmethacrylat und dem Butyl(meth)acrylat,
- die modifizierten Acrylnitril-Butadien-Styrol-Copolymere, die einen Butadienanteil aufweisen größer als oder gleich 60 Gew.-% im Verhältnis zu dem Gesamtgewicht des modifizierten Acrylnitril- Butadien-Styrol-Polymers,
- die Styrol-Butadien-Copolymere, und
- eine beliebige ihrer Mischungen.

10. Zusammensetzung gemäß einem beliebigen der vorhergehenden Ansprüche, in der das Acrylnitril-Butadien-Styrol-Polymer oder das Polymerderivat von Acrylnitril-Butadien-Styrol recycelt ist.

11. Verfahren zur Herstellung einer Zusammensetzung gemäß einem beliebigen der Ansprüche 1 bis 10, umfassend:
- einen Schritt des Mischens eines Acrylnitril-Butadien-Styrol-Polymers oder eines Derivats von Acrylnitril-Butadien-Styrol-Polymer, eines Additivs mit hoher Wärmebeständigkeit in der Form eines Terpolymers aus einem N-substituierten Maleimid-Monomer, einem Vinylmonomer und einem Monomer eines ungesättigten Dicarbonsäureanhydrids, mindestens eines ersten Schlagzähmodifikatorzusatzes und eines zweiten Schlagzähmodifikatorzusatzes, wobei das Verhältnis zwischen dem Massenanteil an zweitem Schlagzähmodifikatorzusatz und dem Massenanteil an erstem Schlagzähmodifikatorzusatz von 0,1 bis 12 reicht, und mindestens eines Antioxidationsadditivs, um eine Zusammensetzung zu erhalten, die einen Gesamtmassenanteil an Schlagzähmodifikatoradditiven von 8% bis 35% im Verhältnis zu der Gesamtmasse der Zusammensetzung aufweist.

12. Verwendung einer Zusammensetzung gemäß einem beliebigen der Ansprüche 1 bis 10, zur Herstellung eines Teils, zum Beispiel eines Fahrzeugteils, vorzugsweise eines Kraftfahrzeugteils.

13. Teil, vorzugsweise Fahrzeugteil, vorzugsweise Kraftfahrzeug-teil, umfassend eine Zusammensetzung gemäß einem beliebigen der Ansprüche 1 bis 10.

14. Verfahren zur Verbesserung mindestens einer thermischen Eigenschaft oder mechanischen Eigenschaft eines recycelten Acrylnitril-Butadien-Styrol-Polymers oder eines von recyceltem Acrylnitril-Butadien-Styrol-Polymer abgeleiteten Derivats, umfassend die Zugabe zu dem recycelten Acrylnitril-Butadien-Styrol-Polymer oder zu dem von recyceltem Acrylnitril-Butadien-Styrol-Polymer abgeleiteten Derivat einer Zusammensetzung, umfassend:
- ein Additiv mit hoher thermischer Beständigkeit in Form eines Terpolymers aus einem N-substituierten Maleimid-Monomer, einem Vinylmonomer und einem Monomer eines Anhydrids einer ungesättigten Dicarbonsäure,
- mindestens ein erstes Schlagzähmodifikator-Additiv und ein zweites Schlagzähmodifikator- Additiv, das Verhältnis zwischen dem Massenanteil an zweitem Schlagzähmodifikator-Additiv und dem Massenanteil an erstem Schlagzähmodifikator-Additiv von 0,1 bis 12 reichend, und
- mindestens ein Antioxidationsadditiv,
um eine Zusammensetzung von recyceltem Acrylnitril-Butadien-Styrol-Polymer oder von einem von recyceltem Acrylnitril-Butadien-Styrol-Polymer abgeleiteten Derivat zu erhalten, aufweisend einen Gesamt-Massenanteil an Schlagzähmodifikator-Additiven, der von 8% bis 35% im Verhältnis zu der Gesamtmasse von der Zusammensetzung von recyceltem Acrylnitril-Butadien-Styrol-Polymer oder von einem von recyceltem Acrylnitril-Butadien-Styrol-Polymer abgeleiteten Derivat reicht.

15. Verwendung einer Kombination von:
- einem Additiv mit hoher thermischer Beständigkeit in Form eines Terpolymers aus einem N-substituierten Maleimid-Monomer, einem Vinylmonomer und einem Monomer eines Anhydrids einer ungesättigten Dicarbonsäure,
- mindestens einem ersten Schlagzähmodifikator-Additiv und einem zweiten Schlagzähmodifikator- Additiv, das Verhältnis zwischen dem Massenanteil an zweitem Schlagzähmodifikator- Additiv und dem Massenanteil an erstem Schlagzähmodifikator-Additiv von 0,1 bis 12 reichend, und
- mindestens einem Antioxidationsadditiv,
zur Verbesserung mindestens einer thermischen oder mechanischen Eigenschaft eines recycelten Acrylnitril- Butadien-Styrol-Polymers oder eines von recyceltem Acrylnitril-Butadien-Styrol-Polymer abgeleiteten Derivats, und zum Erhalten einer Zusammensetzung von recyceltem Acrylnitril-Butadien-Styrol-Polymer oder von einem von recyceltem Acrylnitril-Butadien-Styrol-Polymer abgeleiteten Derivat, aufweisend einen Massenanteil Gesamtmassenanteil an Schlagzähmodifikatoradditiven, reichend von 8 % bis 35 % im Verhältnis zu der Masse gesamt der Zusammensetzung aus recyceltem Acrylnitril-Butadien-Styrol-Polymer oder aus Derivat von recyceltem Acrylnitril-Butadien-Styrol-Polymer.

## Claims

1. A composition comprising:
- an acrylonitrile-butadiene-styrene polymer or acrylonitrile-butadiene-styrene polymer derivative,
- a high heat resistant additive in the form of a terpolymer of an N-substituted maleimide monomer, a vinyl monomer and an unsaturated dicarboxylic acid anhydride monomer, ,
- at least a first impact modifier additive and a second impact modifier additive, and
- at least one antioxidant additive;
wherein the total weight content of impact modifier additives varies from 8% to 35%, by weight relative to the total weight of the composition, and the ratio between the weight content of second impact modifier additive and the weight content of first impact modifier varies from 0.1 to 12.

2. The composition according to claim 1, wherein the weight content of high heat resistant additive varies from 15% to 35%, preferably from 18% to 30%, advantageously from 20% to 25% by weight relative to the total weight of the composition.

3. The composition according to claim 1 or 2, wherein the total weight content of impact modifier additive varies from 10% to 25%, more preferably from 12% to 20%, advantageously from 13% to 18% by weight relative to the total weight of the composition.

4. The composition according to any of the preceding claims, wherein the first impact modifier additive and the second impact modifier additive are different from each other and independently selected from among:
- copolymers of ethylene and/or butene and a polar monomer chosen from among (m)ethyl acrylate, (m)ethyl methacrylate and butyl (meth)acrylate;
- modified acrylonitrile-butadiene-styrene copolymers having a butadiene content higher than or equal to 60% by weight relative to the total weight of the modified acrylonitrile-butadiene-styrene polymer,
- styrene-ethylene/butene-styrene copolymers grafted with maleic anhydride or glycidyl methacrylate;
- ethylene-butyl acrylate copolymers, optionally grafted with maleic anhydride;
- styrene-butadiene copolymers, preferably block styrene-butadiene copolymers, preferably multiblock or diblock styrene-butadiene copolymers;
- styrene-ethylene/butene-styrene copolymers, preferably block styrene-ethylene/butene-styrene copolymers; and
- any of the mixtures thereof.

5. The composition according to any one of the preceding claims, wherein the ration between the total weight content of first and second impact modifier additives and the weight content of high heat resistant additive varies from 0.3 to 2.0, preferably from 0.4 to 1.5, more preferably from 0. 5 to 1.2, further preferably from 0.6 to 1.0, advantageously from 0.65 to 0.85,

6. The composition according to any one of the preceding claims, wherein the ratio between the weight content of second impact modifier additive and the weight content of first impact modifier varies from 0.3 to 8.0, more preferably from 0.4 to 6.0, further preferably from 0.5 to 3.0.

7. The composition according to any one of the preceding claims, wherein the weight content of first impact modifier additive varies from 2% to 18%, preferably from 3% to 15%, more preferably from 4% to 12%, advantageously from 4% to 8% by weight relative to the total weight of the composition.

8. The composition according to any one of the preceding claims, wherein the weight content of second impact modifier additive varies from 5% to 25%, preferably from 6% to 20%, more preferably from 7% to 16%, advantageously form 8% to 12% by weight relative to the total weight of the composition.

9. The composition according to any one of the preceding claims, wherein the first impact modifier additive and second impact modifier additive differ from each other and are independently chosen from among:
- copolymers of ethylene and/or butene and a polar monomer chosen from among (m)ethyl acrylate, (m)ethyl methacrylate and butyl (meth)acrylate;
- modified acrylonitrile-butadiene-styrene copolymers having a butadiene content higher than or equal to 60% by weight relative to the total weight of the modified acrylonitrile-butadiene-styrene polymer;
- styrene-butadiene copolymers, and
- any of the mixtures thereof.

10. The composition according to any of the preceding claims, wherein the acrylonitrile-butadiene-styrene polymer or acrylonitrile-butadiene-styrene polymer derivative is recycled.

11. A method for preparing a composition according to any of claims 1 to 11, comprising:
- a step of mixing an acrylonitrile-butadiene-styrene polymer or an acrylonitrile-butadiene-styrene polymer derivative; a high heat resistant additive selected from among a terpolymer of an N-substituted maleimide monomer, a vinyl monomer, and an unsaturated dicarboxylic acid anhydride monomer, , at least one first impact modifier additive and a second impact modifier additive wherein the ratio between the weight content of second impact modifier additive and the weight content of first impact modifier varies from 0.1 to 12, at least one antioxidant additive, so as to obtain a composition wherein the total weight content of impact modifier additives varies from 8% to 35%, by weight relative to the total weight of the composition.

12. Use of a composition according to any of claims 1 to 10 for the manufacture of a part, for example a vehicle part, preferably an automotive vehicle part.

13. A part, preferably vehicle part, preferably automotive vehicle part, comprising a composition according to any of claims 1 to 10.

14. A method to improve at least one thermal or mechanical property of a recycled acrylonitrile-butadiene-styrene polymer, or of recycled acrylonitrile-butadiene-styrene polymer derivative, comprising the addition to the recycled acrylonitrile-butadiene-styrene polymer or to the recycled acrylonitrile-butadiene-styrene polymer derivative, of a composition comprising:
- a high heat resistant additive in the form of a terpolymer of an N-substituted maleimide monomer, a vinyl monomer and an unsaturated dicarboxylic acid anhydride monomer; ,- at least a first impact modifier additive and a second impact modifier additive, wherein the ratio between the weight content of second impact modifier additive and the weight content of first impact modifier varies from 0.1 to 12, and
- at least one antioxidant additive;
so as to obtain a composition of recycled acrylonitrile-butadiene-styrene polymer, or of recycled acrylonitrile-butadiene-styrene polymer derivative wherein the total weight content of impact modifier additives varies from 8% to 35%, by weight relative to the total weight of the composition of recycled acrylonitrile-butadiene-styrene polymer, or of recycled acrylonitrile-butadiene-styrene polymer derivative.

15. Use of a combination of:
- a high heat resistant additive selected in the form of a terpolymer of an N-substituted maleimide monomer, a vinyl monomer and an unsaturated dicarboxylic acid anhydride monomer;
- at least a first impact modifier and a second impact modifier additive, wherein the ratio between the weight content of second impact modifier additive and the weight content of first impact modifier varies from 0.1 to 12, and
- at least one antioxidant,
to improve at least one thermal or mechanical property of a recycled acrylonitrile-butadiene-styrene polymer or of a recycled acrylonitrile-butadiene-styrene polymer derivative, and obtain a composition of recycled acrylonitrile-butadiene-styrene polymer, or of recycled acrylonitrile-butadiene-styrene polymer derivative wherein the total weight content of impact modifier additives varies from 8% to 35%, by weight relative to the total weight of the composition of recycled acrylonitrile-butadiene-styrene polymer, or of recycled acrylonitrile-butadiene-styrene polymer derivative.
